(19)

Europäisches
Patentamt
European
Patent Office
Office européen
des brevets

(11) **EP 2 639 124 A1**

(12) **EUROPEAN PATENT APPLICATION**
published in accordance with Art. 153(4) EPC

(43) Date of publication:
**18.09.2013 Bulletin 2013/38**

(21) Application number: **10859573.7**

(22) Date of filing: **10.11.2010**

(51) Int Cl.:
**B60T 17/00** *(2006.01)*     **F02D 41/04** *(2006.01)*

(86) International application number:
**PCT/JP2010/069994**

(87) International publication number:
**WO 2012/063328 (18.05.2012 Gazette 2012/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **TOYOTA JIDOSHA KABUSHIKI
KAISHA**
**Toyota-shi, Aichi-ken, 471-8571 (JP)**

(72) Inventors:
• **TSUMORI, Chika**
  **Toyota-shi**
  **Aichi 471-8571 (JP)**
• **KATAOKA, Kenji**
  **Toyota-shi**
  **Aichi 471-8571 (JP)**

(74) Representative: **TBK**
**Bavariaring 4-6**
**80336 München (DE)**

(54) **VEHICLE BRAKE SYSTEM**

(57)     In a vehicle brake system (1), which starts an engine (50) for recovering a brake negative pressure of a servo unit (12) connected to an intake pathway (51) of the engine (50), a valve opening of a throttle valve (53) of the engine (50) is controlled in an opening direction when the engine is started for recovering the brake negative pressure during running. It is desired that recovery control of the brake negative pressure by valve opening control of the throttle valve (53) is performed during brake pressing operation by a driver.

FIG.1

EP 2 639 124 A1

**Description**

Field

The present invention relates to a vehicle brake system, which generates braking force in a vehicle according to brake operation by a driver.

Background

Conventionally, the vehicle brake system is provided with a servo unit, which utilizes an intake negative pressure of an engine, for decreasing operational burden at the time of the brake operation by the driver. The servo unit is configured to assist pressing operation of a brake pedal by utilizing a difference between a brake negative pressure and an atmospheric pressure by the intake negative pressure of the engine. Therefore, when the brake operation is performed while the engine is turned off, the brake negative pressure of the servo unit decreases, so that the pressing operation of the brake pedal might not be assisted. Therefore, technology to recover the brake negative pressure by starting the engine, which is turned off, is conventionally known. For example, such technology is disclosed in following Patent Literature 1.

Meanwhile, the following Patent Literature 2 discloses technology to make a valve opening of a throttle valve smaller than that in an idle state at the time of restart of the engine, which is turned off during running. Also, following Patent Literature 3 discloses technology to release idle stop to start the engine when a vehicle speed is not lower than a predetermined vehicle speed and the brake negative pressure of the servo unit is not higher than a predetermined brake negative pressure. At the time of engine start associated with the idle stop release, the engine is started after the throttle valve is closed.

Citation List

Patent Literature

Patent Literature 1: Japanese Patent Application Laid-open No. 2006-200370
Patent Literature 2: Japanese Patent Application Laid-open No. 2010-185322
Patent Literature 3: Japanese Patent Application Laid-open No. 2006-057513

Summary

Technical Problem

Although it is possible to recover the brake negative pressure by the start of the engine in this manner, when the driver performs the brake operation at the time of recovery control, the brake pedal is pushed in a pressing direction with the recovery of the brake negative pressure, so that excessive braking force, which is not intended by the driver, might be generated. Especially, in the above-described technology in Patent Literature 1, the brake negative pressure is rapidly recovered, so that the brake pedal is put into a state of being pressed at once by the recovery control of the brake negative pressure and this might cause sudden braking, which is not intended by the driver.

Therefore, an object of the present invention is to improve such a disadvantage of the conventional example and to provide the vehicle brake system capable of recovering the brake negative pressure while maintaining the braking force according to intention of the driver. Solution to Problem

In order to achieve the above mentioned object, in a vehicle brake system according to the present invention, which starts an engine for recovering a brake negative pressure of a servo unit connected to an intake pathway of the engine, a valve opening of a throttle valve of the engine is controlled in an opening direction when the engine is started for recovering the brake negative pressure during running.

Here, it is desirable that recovery control of the brake negative pressure by valve opening control of the throttle valve is performed during brake pressing operation by a driver.

In order to achieve the above mentioned object, in a vehicle brake system according to the present invention, which starts an engine for recovering a brake negative pressure of a servo unit connected to an intake pathway of the engine, pedal reaction force is generated on a brake pedal in a direction opposite to a direction of pedal force by a driver when the engine is started for recovering the brake negative pressure during running.

Here, it is desirable that the pedal reaction force is generated during brake pressing operation by the driver.

Advantageous Effects of Invention

The vehicle brake system according to the present invention slows down a generating speed of an intake speed by opening the valve opening of the throttle valve in the opening direction when the engine is started. Therefore, the vehicle brake system can slow down a recovery speed of the brake negative pressure of the servo unit. Also, the vehicle brake system according to the present invention can inhibit generation of excessive pedal force, which is not intended by the driver, by generating the pedal reaction force in the direction opposite to the direction of the pedal force by the driver on the brake pedal when the engine starts. According to the vehicle brake system, a situation in which the brake pedal of which brake pressing operation is being performed is pushed against driver's intention when the brake negative pressure is recovered is avoided. Therefore, the vehicle brake system can recover the brake negative pressure while maintaining a state in which the braking force according to the intention of the driver is generated and can resolve uncomfortable feeling in operation about the push of the brake pedal associated with the recovery of the brake negative pressure.

Brief Description of Drawings

FIG. 1 is a view illustrating a configuration of a first embodiment of a vehicle brake system according to the present invention.
FIG. 2 is a flowchart explaining control operation of the vehicle brake system of the first embodiment.
FIG. 3 is a time chart explaining the control operation of the vehicle brake system of the first embodiment.
FIG. 4 is a view illustrating a configuration of a second embodiment of a vehicle brake system according to the present invention.
FIG. 5 is a flowchart explaining control operation of the vehicle brake system of the second embodiment.
FIG. 6 is a time chart explaining the control operation of the vehicle brake system of the second embodiment.

Description of Embodiments

Hereinafter, embodiments of a vehicle brake system according to the present invention are described in detail with reference to the drawings. Meanwhile, the present invention is not limited by the embodiments.

[First Embodiment]

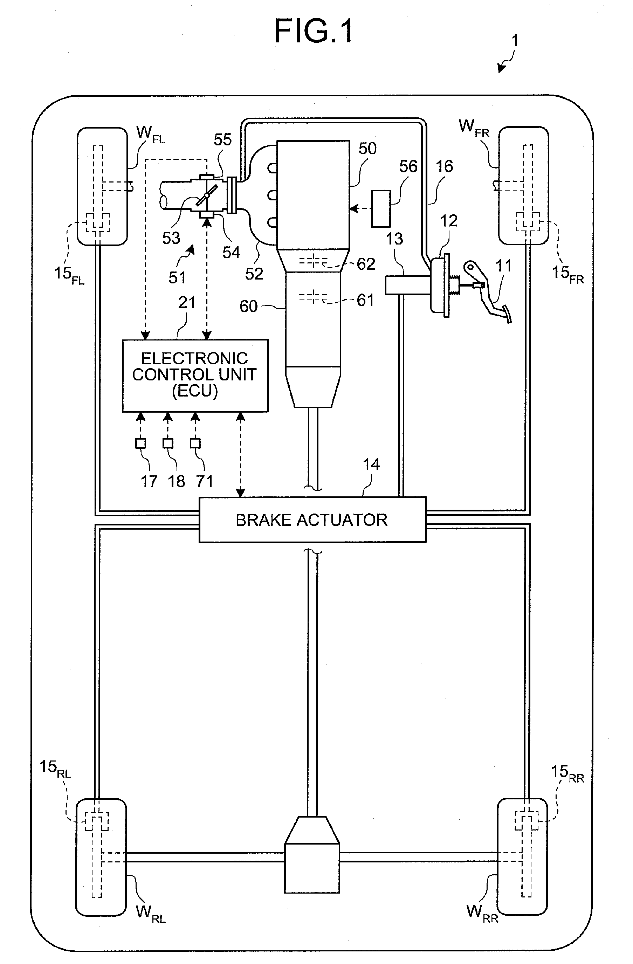

A first embodiment of a vehicle brake system according to the present invention is described with reference to FIGS. 1 to 3.
A reference sign 1 in FIG. 1 represents the vehicle brake system of this embodiment. Herein, a system capable of adjusting wheel braking force for each of wheels $W_{FL}$, $W_{FR}$, $W_{RL}$, and $W_{RR}$ is described as an example.
The vehicle brake system 1 is provided with a brake pedal 11 operated by a driver, a servo unit (so-called brake booster) 12, which boosts pedal force input to the brake pedal 11, a master cylinder 13, which converts the pedal force boosted by the servo unit 12 to a fluid pressure of a brake fluid (brake fluid pressure), a fluid pressure adjusting device (hereinafter, referred to as a "brake actuator") 14 capable of adjusting the converted brake fluid pressure for each of the wheels $W_{FL}$, $W_{FR}$, $W_{RL}$, and $W_{RR}$, and braking devices $15_{FL}$, $15_{FR}$, $15_{RL}$, and $15_{RR}$ (each of which is composed of a disk rotor, a caliper and the like, or of a drum, a wheel cylinder and the like) to which the brake fluid pressure, which passes through the brake actuator 14, is supplied for generating the braking force on the wheels $W_{FL}$, $W_{FR}$, $W_{RL}$, and $W_{RR}$, respectively. In the vehicle brake system 1, an electronic control unit (ECU) 21 controls the brake actuator 14 to generate required wheel driving force for desired wheels $W_{FL}$, $W_{FR}$, $W_{RL}$, and $W_{RR}$.
Herein, the servo unit 12 is provided with a negative pressure chamber and an atmospheric pressure chamber. The servo unit 12 creates a difference between a negative pressure in the negative pressure chamber and an atmospheric pressure in the atmospheric pressure chamber by making the pressure in the negative pressure chamber the negative pressure by an intake negative pressure of an engine 50 and boosts the pedal force by the driver according to the difference, thereby assisting pressing operation of the brake pedal 11 by the driver. For this, the vehicle brake system 1 is provided with negative pressure piping 16, which connects an intake pathway 51 (pathway from an air cleaner not illustrated to an intake manifold 52) of the engine 50 and the negative pressure chamber of the servo unit 12. Although the negative pressure piping 16 connected to the intake manifold 52 is illustrated as an example, this may be connected to any position on the intake pathway 51 as long as this is a well-known position in this technical field. In this manner, the servo unit 12 operates by utilizing the intake negative pressure of the engine 50. Therefore, it is required that the intake negative pressure be continuously generated by operation of the engine 50 in order to maintain a brake negative pressure in the negative pressure chamber required for the operation.

Recent vehicles may turn off the engine 50 while running and coast in order to reduce fuel consumption. When the engine 50 is turned off, not only ignition by an ignition plug but also injection of fuel are stopped. Coasting is performed in a state in which power transmission between the engine 50 and the driving wheels $W_{RL}$ and $W_{RR}$ is possible or in a state in which the power transmission is not possible. Coasting in the latter state in which the power transmission is not possible is performed by disengaging a power connecting/disconnecting unit of the power transmission device between the engine 50 and the driving wheels $W_{RL}$ and $W_{RR}$. The power transmission device is intended to mean the device, which transmits power of the engine 50 toward the driving wheels $W_{RL}$ and $W_{RR}$ such as a transmission. For example, when the transmission is an automatic transmission 60, an input clutch 61 in a transmission main body, a lock-up clutch 62 of a torque converter and the like serve as the power connecting/disconnecting unit. When the input clutch 61 is disengaged, the automatic transmission 60 is shifted into neutral, so that the power transmission between the engine 50 and the driving wheels $W_{RL}$ and $W_{RR}$ becomes impossible. Also, when the lock-up clutch 62 is disengaged, the power transmission between the engine 50 and the automatic transmission 60 becomes impossible, so that the power is not transmitted between the engine 50 and the driving wheels $W_{RL}$ and $W_{RR}$.

In the coasting in the state in which the power transmission therebetween is possible, the power connecting/disconnecting unit is in an engaged state and so-called engine braking occurs, so that if an intake valve (not illustrated) performs open/close operation, the intake negative pressure is generated in the intake pathway 51 by up-and-down movement of a piston (not illustrated). However, when the open/close operation of the intake valve is forcibly stopped by a well-known intake valve stopping mechanism and the like, the intake negative pressure is not generated in the intake pathway 51 even when the piston may move up and down. Also, in the coasting in the state in which the power transmission is not possible, the piston does not move up and down regardless of whether the intake valve performs the open/close operation, so that the intake negative pressure is not generated in the intake pathway 51. Further, the intake negative pressure is not generated in the intake pathway 51 also when the engine 50 is turned off and the vehicle stops.

Since the pressure in the intake pathway 51 is the atmospheric pressure in the state in which the intake negative pressure is not generated, when the driver performs the brake pressing operation in this state, the brake negative pressure in the negative pressure chamber decreases in the servo unit 12. Therefore, an assisting function by the servo unit 12 becomes inoperative and the brake pedal 11 becomes heavier, so that the driver performs the brake pressing operation strongly with the pedal force larger than that when the assisting function is operated. Therefore, the electronic control unit 21 drives a starter motor 56 to restart the engine 50 when the brake negative pressure becomes lower than a predetermined value and generates the intake negative pressure to maintain the brake negative pressure not lower than the predetermined value. Meanwhile, the predetermined value is, for example, a minimum brake negative pressure capable of exerting a required assisting function by the servo unit 12.

In this manner, the vehicle brake system 1 is configured to recover the brake negative pressure by restarting the engine 50, which is turned off, even if the brake negative pressure of the servo unit 12 decreases. Herein, magnitude of the brake negative pressure triggers restarting control of the engine 50 at that time, so that the brake pressing operation, which is a reason of the decrease in the brake negative pressure, might be performed by the driver during the restarting control. When the restarting control of the engine 50 for generating the intake negative pressure is performed during the brake pressing operation, as the brake negative pressure increases, the difference between the same and the atmospheric pressure becomes larger, so that the brake pedal 11 of which brake pressing operation is being performed might be pushed in a pressing direction to generate excessive braking force, which is not intended by the driver. Also, since the intake negative pressure is rapidly generated when the engine 50 is restarted, the brake pedal 11 might be pushed at once by the brake negative pressure, which is similarly rapidly recovered, so that there is a risk that sudden braking, which is not intended by the driver, occurs.

Therefore, the vehicle brake system 1 prevents generation of the braking force, which is not intended by the driver, by the restarting control of the engine 50 for generating the intake negative pressure. Specifically, a recovery speed, that is to say, a generating speed of the intake negative pressure (brake negative pressure) is slowed down to prevent the brake pedal 11 from being pushed to a depth, which is not intended by the driver, and at a speed, which is not intended by the driver, when the engine 50 is restarted. Therefore, the vehicle brake system 1 is provided with a negative pressure generation delay unit, which slows down the generating speed (recovery speed) of the intake negative pressure (brake negative pressure).

The negative pressure generation delay unit is operated when the restarting control of the engine 50 for generating the intake negative pressure is performed during running (coasting) and during the brake pressing operation.

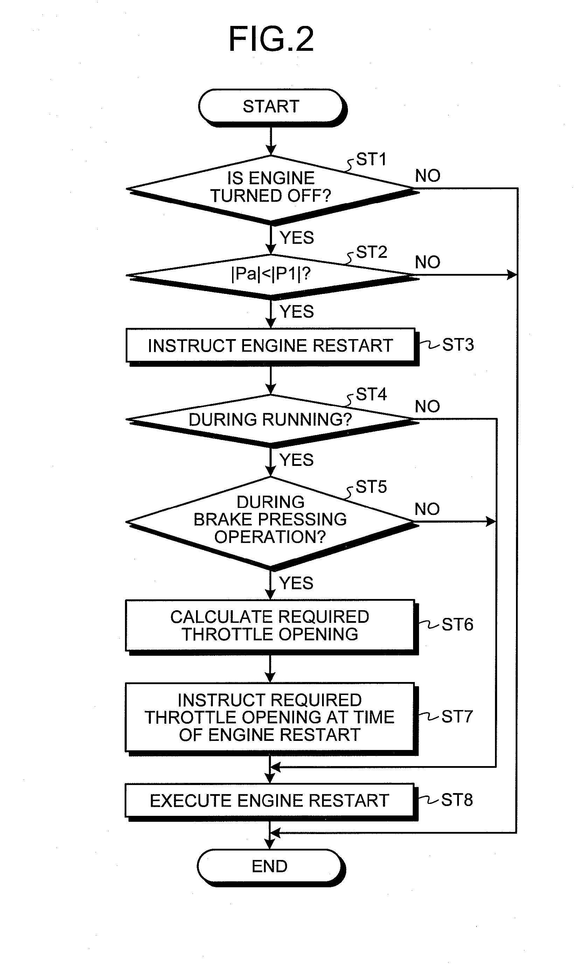

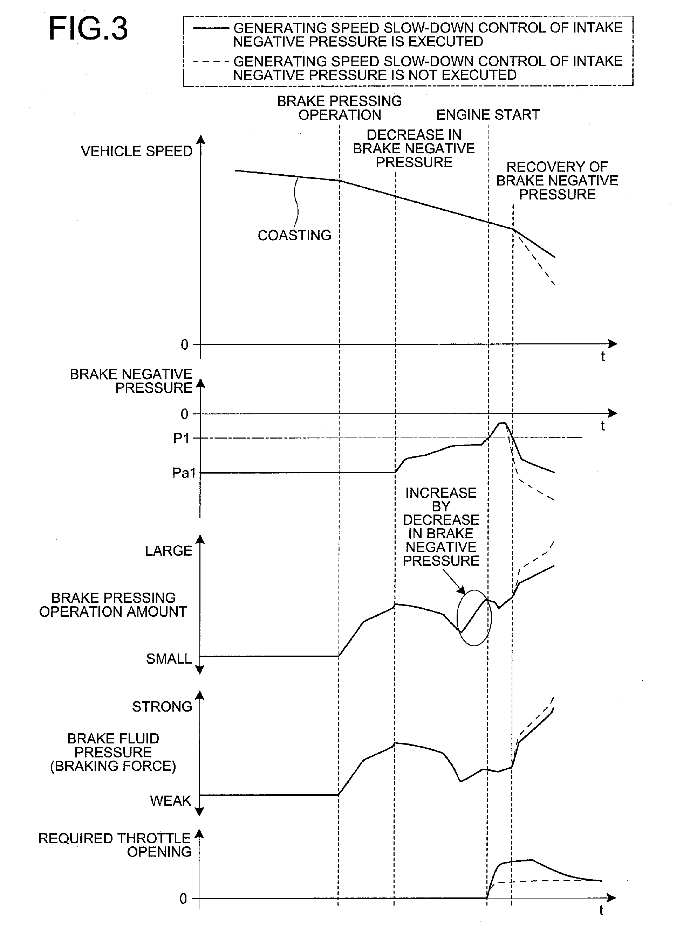

Herein, the generating speed of the intake negative pressure is slowed down as a valve opening of a throttle valve 53 approaches a fully opened state. From this, in this embodiment, the throttle valve 53 and a valve actuator 54, which performs open/close operation of the throttle valve 53, are utilized as the negative pressure generation delay unit. The electronic control unit 21 inhibits occurrence of the excessive braking force and the sudden braking, which are not intended by the driver, by operating the throttle valve 53 to realize a required valve opening by driving the valve actuator 54 when the restarting control of the engine 50 for generating the intake negative pressure is performed during the coasting and during the brake pressing operation. Hereinafter, this control operation is described with reference to a flowchart in FIG. 2 and a time chart in FIG. 3.

The electronic control unit 21 first determines whether the engine 50 is turned off (step ST1). Herein, a term "turn off" is intended to mean that the ignition of the fuel is not made (the ignition of the fuel is not caused in a case of a diesel engine).

The electronic control unit 21 finishes this control operation when the engine 50 is operating, and on the other hand, this compares an absolute value of a brake negative pressure Pa (<0) in the negative pressure chamber of the servo unit 12 with an absolute value of a predetermined value P1 (<0) described above when the engine 50 is turned off (step ST2). A value detected by a negative pressure detecting device 17 such as a pressure sensor is utilized as the brake negative pressure Pa.

When the absolute value of the brake negative pressure Pa is not lower than the absolute value of the predetermined value P1, a sufficient brake negative pressure Pa is ensured, so that the electronic control unit 21 finishes this control operation. On the other hand, when the absolute value of the brake negative pressure Pa is lower than the absolute value of the predetermined value P1, that is to say, when the brake negative pressure Pa is lower than the predetermined value P1, the electronic control unit 21 gives an instruction to restart the engine 50 (step ST3).

Then the electronic control unit 21 determines whether the vehicle is running (that is to say, coasting) (step ST4), and when the vehicle is running, this determines whether the driver performs the brake pressing operation (step ST5). A value detected by a vehicle speed detecting device 71 such as a vehicle speed sensor and a wheel speed sensor may be utilized for determining whether the vehicle is running. Also, a value detected by a pedal operation amount detecting device 18 capable of detecting an operation amount of the brake pedal 11 may be utilized for determining whether the brake pressing operation is being performed. If the pedal operation amount detecting device 18 detects a pressing operation amount of the brake pedal 11, a pedal position detecting sensor capable of detecting a pressing position of the brake pedal 11 is utilized. On the other hand, if the pedal operation amount detecting device 18 detects the pedal force on the brake pedal 11 by the driver, a pedal force sensor such as a pressure sensor is utilized.

Herein, if the vehicle is not running or if the brake pressing operation is not being performed even when the vehicle is running, the electronic control unit 21 proceeds to step ST8 to be described later and executes the restart of the engine 50 without performing generating speed slow- down control of the intake negative pressure. This is because, when the vehicle stops, the excessive braking force and the sudden braking, which are not intended by the driver, do not occur in the vehicle even when the brake negative pressure Pa is recovered during the brake pressing operation. Also, when the brake pressing operation is not performed, the excessive braking force and the sudden braking, which are not intended by the driver, do not occur in the vehicle even when the vehicle is running.

On the other hand, when it is determined that the vehicle is running and the brake pressing operation is being performed, the electronic control unit 21 calculates a required valve opening of the throttle valve 53 (required throttle opening) (step ST6). The required throttle opening is set to be opened more than the required throttle opening when the engine 50 is restarted without the generating speed slow-down control of the intake negative pressure (well-known required throttle opening at the time of the engine restart in this technical field). Herein, when the throttle valve 53 is fully opened, the brake negative pressure Pa might not be sufficiently recovered due to deficiency in the intake negative pressure and desired sufficient braking force might not be generated by the brake pressing operation. Also, in this case, an adverse effect regarding vibration and noise, for example, might occur: engine pick-up of the engine 50 is too high (that is to say, engine rotational speed rapidly increases), for example. Therefore, a mean value of the required throttle opening when the driver of the vehicle running by the power of the engine 50 performs acceleration pressing operation (that is to say, acceleration operation) may be set as the required throttle opening at step ST6. Therefore, the electronic control unit 21 is allowed to learn the mean value of the required throttle opening according to the acceleration pressing operation of the driver when the vehicle runs by the power of the engine 50. At that time, it is possible to learn based on an instruction value of the required throttle opening or may learn based on an actual throttle opening by a value detected by a valve opening detecting device 55 such as a valve opening sensor.

The electronic control unit 21 gives an instruction to set the required throttle opening at step ST6 as a required value of the throttle valve 53 at the time of the engine restart (step ST7). Then, the electronic control unit 21 controls the throttle valve 53 to realize the required throttle opening to restart the engine 50 (step ST8).

For example, as illustrated in the time chart in FIG. 3, a brake negative pressure Pa1 (<P1) is maintained during the coasting until the driver performs the brake pressing operation. When the driver performs the brake pressing operation during the coasting, the brake pressing operation amount increases, and at the same time, the brake fluid pressure (braking force) increases and deceleration of the vehicle increases. At the same time, the brake negative pressure Pa in the negative pressure chamber decreases in the servo unit 12. The decrease in the brake negative pressure Pa decreases a degree of the boosting of the pedal force by the servo unit 12, so that pressing operation feeling of the brake pedal 11 by the driver becomes heavier. At that time, the brake pressing operation amount by the driver decreases and the brake fluid pressure (braking force) decreases. Therefore, the force applied to the brake pedal 11 by the driver is stronger in response to the pressing operation feeling, which becomes heavier, so that the brake pressing operation amount (pedal force) by the driver increases again. However, the assisting function by the servo unit 12 does not sufficiently operate, so that the brake fluid pressure (braking force) at that time does not increase to magnitude corresponding to the brake pressing operation amount (pedal force).

When the brake negative pressure Pa becomes lower than the predetermined value P1 by the brake operation by the driver, the brake negative pressure Pa is recovered by the restart of the engine 50. At that time, since the driver herein performs the brake pressing operation, the engine 50 is restarted with a larger required throttle opening in an opening direction than that when the brake pressing operation is not performed.

By increasing the required throttle opening in the opening direction in this manner, in the engine 50, the intake negative pressure increases more slowly than that in a conventional case with the restart. Therefore, the brake negative pressure Pa in the negative pressure chamber of the servo unit 12 increases slowly in accordance with the generating speed of the intake negative pressure. Therefore, since the degree of the boosting of the pedal force by the servo unit 12 also increases slowly, it is possible to allow the driver to feel that the pressing operation feeling of the brake pedal 11 gradually becomes lighter and to prevent the driver from increasing the brake pressing operation amount (pedal force) at that time, so that it is possible to avoid a situation in which the brake pedal 11 of which brake pressing operation is being performed is pushed beyond necessity when the brake negative pressure Pa is recovered to generate the excessive braking force, which is not intended by the driver, in the vehicle. Also, since the vehicle brake system 1 does not rapidly recover the brake negative pressure Pa, a situation in which the brake pedal 11 of which brake pressing operation is being performed is pushed at once when the brake negative pressure Pa is recovered does not occur. Therefore, the vehicle brake system 1 can avoid the sudden braking by the excessive braking force, which is not intended by the user. That is to say, the vehicle brake system 1 can recover the brake negative pressure Pa while maintaining a state in which the braking force according to the intention of the driver is generated. Further, the vehicle brake system 1 can also resolve uncomfortable feeling in operation about the push of the brake pedal 11 associated with the recovery of the brake negative pressure Pa. Further, the vehicle brake system 1 can avoid the occurrence of the excessive braking force and the sudden braking, which are not intended by the driver, so that this can recover the brake negative pressure Pa while maintaining a stable attitude of the vehicle during the running.

[Second Embodiment]

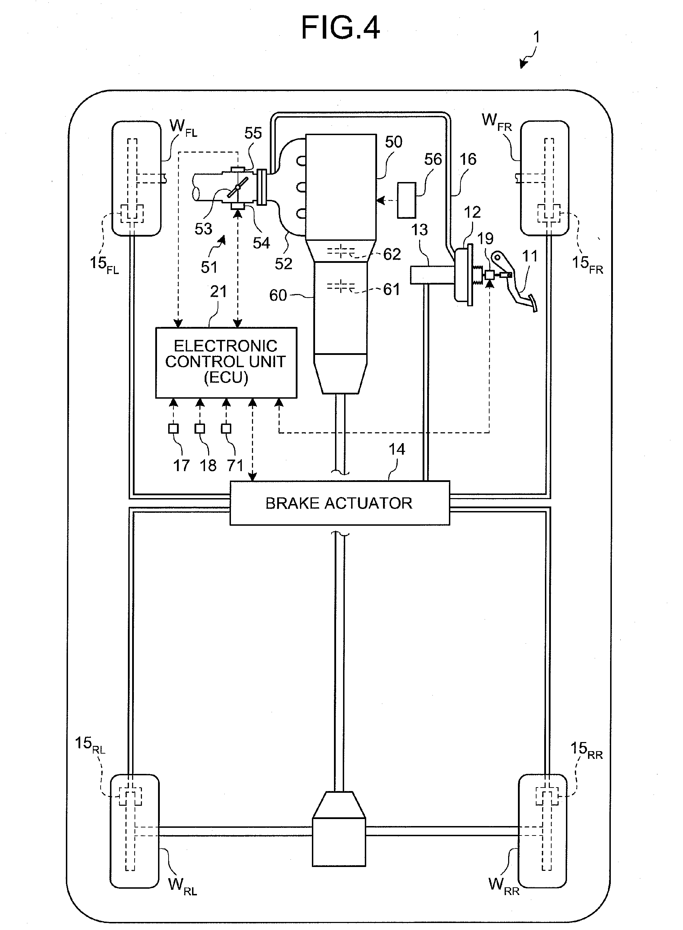

A second embodiment of a vehicle brake system according to the present invention is described with reference to FIGS. 4 to 6.

A reference sign 1 in FIG. 4 represents the vehicle brake system of this embodiment. The vehicle brake system 1 is provided with a brake pedal 11, a servo unit 12, a master cylinder 13, a brake actuator 14, and braking devices $15_{FL}$, $15_{FR}$, $15_{RL}$, and $15_{RR}$. They are the same as those of the vehicle brake system 1 of the first embodiment.

In the first embodiment, when restarting control of an engine 50 is performed for generating an intake negative pressure during coasting and during brake pressing operation, a generating speed of the intake negative pressure (brake negative pressure Pa) is slowed down so as not to generate braking force, which is not intended by a driver, by recovery of the brake negative pressure associated with restart of the engine 50. In the second embodiment, the generation of the braking force, which is not intended by the driver, associated with the recovery of the brake negative pressure Pa is prevented by a following device in place of generating speed slow-down control of the intake negative pressure or together with the generating speed slow-down control.

Such braking force, which is not intended by the driver, is generated because the brake pedal 11 of which brake pressing operation is being performed is pushed against driver's intention with the recovery of the brake negative pressure Pa. This is pushed in this manner because the brake negative pressure Pa is recovered in a state in which pedal force of the brake pedal 11 with heavy pressing operation feeling is increased. Therefore, if the brake pedal 11 is prevented from being pushed against the driver's intention at the same time as the recovery of the brake negative pressure Pa, the generation of the braking force, which is not intended by the driver, is avoided. Therefore, in the vehicle brake system 1, pedal reaction force Pb corresponding to pedal force Px by the driver is applied to the brake pedal 11 when the brake negative pressure Pa is recovered so as to prevent the push of the brake pedal 11 against the driver's intention from occurring.

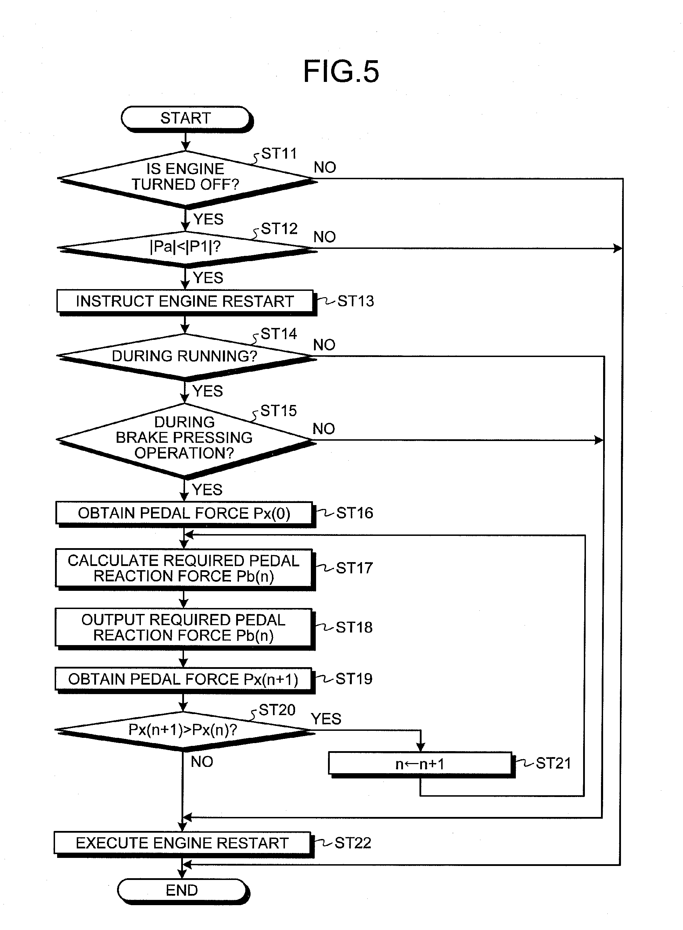

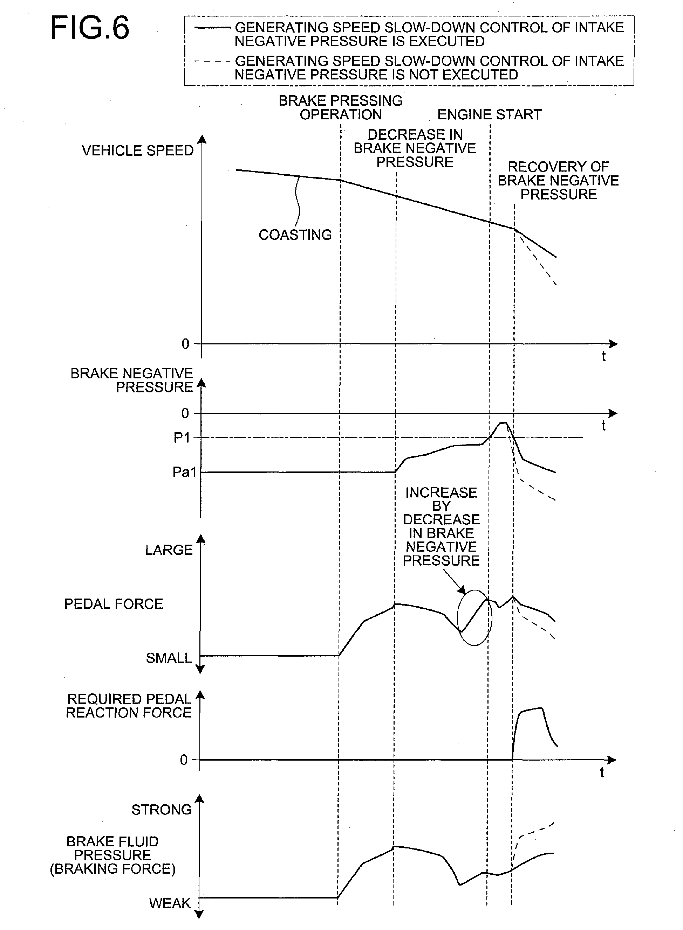

The vehicle brake system 1 is provided with a pedal reaction force generating device 19, which generates the pedal reaction force Pb in a direction opposite to a direction of the pedal force by the driver on the brake pedal 11. The pedal reaction force generating device 19 is arranged between the brake pedal 11 and the servo unit 12. The pedal reaction force generating device 19 is provided with a hydraulic or electric actuator, for example. In a case of the hydraulic pedal reaction force generating device 19, the electronic control unit 21 controls the hydraulic actuator such as a hydraulic motor to generate required pedal reaction force Pb(n) corresponding to pedal force Px(n) on the brake pedal 11 (n=0, 1, ...). In a case of the electric pedal reaction force generating device 19, the electronic control unit 21 controls the electric actuator such as an electric motor to generate the required pedal reaction force Pb(n) corresponding to the pedal force Px(n) on the brake pedal 11. Hereinafter, this control operation is described with reference to a flowchart in FIG. 5 and a time chart in FIG. 6. Meanwhile, since a calculating process from step ST11 to step ST15 is the same as the calculating process from step ST1 to step ST5 in the first embodiment, the description thereof is herein omitted.

When the electronic control unit 21 determines that the brake pressing operation is being performed at step ST15 and reaches a conclusion that a vehicle is coasting and the brake pressing operation is being performed, this obtains information of the pedal force Px(n) {=Px(0)} on the brake pedal 11 by the brake pressing operation (step ST16). The information of the pedal force Px(n) is obtained from a pedal operation amount detecting device (pedal force sensor) 18.

Then, the electronic control unit 21 calculates the required pedal reaction force Pb (n) on the brake pedal 11 (step ST17) to set the required pedal reaction force Pb (n) as an instruction value to the pedal reaction force generating device 19 and outputs the same (step ST18) .

The required pedal reaction force Pb(n) is preferably set to be output before the brake negative pressure Pa is recovered at the latest, in further detail, before the brake negative pressure Pa is recovered to magnitude to generate the braking force against the driver's intention at the latest. In the illustration in the flowchart, it is configured such that the required pedal reaction force Pb(n) is output before the engine 50 is restarted and the required pedal reaction force Pb(n) actually acts on the brake pedal 11 when the brake negative pressure Pa starts recovering in consideration of delay in response until the required pedal reaction force Pb(n) actually acts on the brake pedal 11.

Herein, when the pedal force Px (n) is constant and does not change from initially obtained pedal force Px (0) , it is possible to balance between the pedal force Px by the driver and the pedal reaction force Pb acting on the brake pedal 11 by outputting the pedal reaction force Pb as large as the pedal force Px (0) , so that it is possible to avoid the push of the brake pedal 11 against the driver's intention. Therefore, at step ST17 immediately after the pedal force Px (0) is obtained at step ST16, required pedal reaction force Pb (0) {=Px (0) } as large as the pedal force Px (0) is set. In this case, excessive pedal force Px, which is not intended by the driver, does not act on the brake pedal 11 even when the brake negative pressure Pa is rapidly recovered during the brake pressing operation, so that it is possible to avoid a situation in which the brake pedal 11 is pushed against the driver's intention and the braking force, which is not intended by the driver, is generated.

When the driver feels that the braking force of the vehicle is not sufficient, the driver further presses the brake pedal 11 to increase the pedal force Px, thereby increasing the braking force. Therefore, when the brake pedal 11 is further pressed, the pressing operation feeling of the brake pedal 11 by the driver might be heavier by the required pedal reaction force Pb(n), which is currently output, even when the brake negative pressure Pa is recovered. Therefore, at that time, the required pedal reaction force Pb(n) is decreased from the currently output one to prevent uncomfortable feeling in the brake pressing operation.

From this, the electronic control unit 21 is allowed to obtain the information of pedal force Px(n+1) again (step ST19) and to determine whether the pedal force Px(n+1) is larger than the pedal force Px(n) obtained a step before, that is to say, whether the brake pedal 11 is further pressed by the driver (step ST20).

When the pedal force Px(n+1) is larger than the pedal force Px(n), the brake pedal 11 is further pressed, so that the electronic control unit 21 increments n (step ST21) and returns to step ST17 to obtain required pedal reaction force Pb(n+1) based on the pedal force Px(n+1). The required pedal reaction force Pb(n+1) is calculated based on a following equation 1.

$$Pb(n + 1) = Pb(n) - \Delta Pb \qquad\qquad (1)$$

A term "$\Delta Pb$" represents a pedal reaction force decreasing amount for preventing the uncomfortable feeling of the heavy pressing operation feeling when the brake pedal 11 is further pressed and is obtained based on a following equation 2, for example.

$$\Delta Pb = \{Px(n + 1) - Px(n)\}*\alpha \qquad\qquad (2)$$

In the equation (2), a term "$\alpha$" represents an adjustment coefficient of the pedal reaction force decreasing amount $\Delta Pb$ and is set to the coefficient, which does not provide the uncomfortable feeling to the driver and does not generate the braking force against the driver's intention when the brake negative pressure Pa is recovered. The adjustment coefficient $\alpha$ may be set in advance based on experiment and simulation.

By outputting the required pedal reaction force Pb(n+1) obtained in this manner, this time also, the excessive pedal force Px, which is not intended by the driver, does not act on the brake pedal 11 even when the brake negative pressure Pa is rapidly recovered during the brake pressing operation, so that it is possible to avoid the situation in which the brake pedal 11 is pushed against the driver's intention and the braking force, which is not intended by the driver, is generated. Further, at that time, the pressing operation feeling of the brake pedal 11 can be made light, so that it is possible to prevent the driver from feeling uncomfortable in the brake pressing operation.

On the other hand, when the pedal force Px(n) is constant and does not change from the pedal force Px(0) or decreases, at step ST20, it is determined that the pedal force Px(n+1) is not larger than the pedal force Px(n). Also when it is determined that the pedal force Px(n+1) is larger than the pedal force Px(n), the pedal force Px(n+1) after that will be eventually the same as the pedal force Px(n) with the decrease in the brake negative pressure Pa. Therefore, at that time, it is determined that the pedal force Px(n+1) is not larger than the pedal force Px(n) at step ST20.

When it is negatively determined at step ST20, the electronic control unit 21 restarts the engine 50 as in a conventional manner (step ST22).

For example, as illustrated in the time chart in FIG. 6, in this case also, the brake negative pressure Pa decreases by the brake pressing operation by the driver during the coasting and the pressing operation feeling of the brake pedal 11 by the driver becomes heavier. When the brake negative pressure Pa becomes lower than a predetermined value P1 by the brake operation by the driver, the brake negative pressure Pa is recovered by the restart of the engine 50. In the illustration in the time chart, it is configured to reduce the pedal force Px by the driver by outputting the required pedal reaction force Pb(n) from the pedal reaction force generating device 19 when the brake negative pressure Pa starts recovering to be the predetermined value P1 or higher, thereby preventing the excessive pedal force Px from acting on the brake pedal 11. Therefore, at that time, the situation in which the brake pedal 11 of which brake pressing operation is being performed is pushed beyond necessity when the brake negative pressure Pa is recovered to generate the excessive braking force, which is not intended by the driver, on the vehicle can be avoided. Also, in the vehicle brake system 1, the brake pedal 11 of which brake pressing operation is being performed is not pushed at once when the brake negative pressure Pa is recovered even when the brake negative pressure Pa is rapidly recovered. Therefore, the vehicle brake system 1 can recover the brake negative pressure Pa while maintaining a state in which the braking force according to the intention of the driver is generated. Further, the vehicle brake system 1 can also resolve the uncomfortable feeling in the operation about the push of the brake pedal 11 associated with the recovery of the brake negative pressure Pa. Further, the vehicle brake system 1 can avoid the occurrence of the excessive braking force and the sudden braking, which are not intended by the driver, so that this can recover the brake negative pressure Pa while maintaining the stable attitude of the vehicle during running.

Industrial Applicability

As described above, the vehicle brake system according to the present invention is useful in the technology to recover the brake negative pressure while maintaining a state in which the braking force according to the intention of the driver is generated.

Reference Signs List

1 vehicle brake system
11 brake pedal
12 servo unit
16 negative pressure piping
17 negative pressure detecting device
18 pedal operation amount detecting device
19 pedal reaction force generating device
21 electronic control unit
50 engine
51 intake pathway
52 intake manifold
53 throttle valve
54 valve actuator

**Claims**

1. A vehicle brake system, which starts an engine for recovering a brake negative pressure of a servo unit connected to an intake pathway of the engine, wherein
   a valve opening of a throttle valve of the engine is controlled in an opening direction when the engine is started for recovering the brake negative pressure during running.

2. The vehicle brake system according to claim 1, wherein
   recovery control of the brake negative pressure by valve opening control of the throttle valve is performed during brake pressing operation by a driver.

3. A vehicle brake system, which starts an engine for recovering a brake negative pressure of a servo unit connected to an intake pathway of the engine, wherein
   pedal reaction force is generated on a brake pedal in a direction opposite to a direction of pedal force by a driver when the engine is started for recovering the brake negative pressure during running.

4. The vehicle brake system according to claim 3, wherein
   the pedal reaction force is generated during brake pressing operation by the driver.

# FIG.1

ELECTRONIC CONTROL UNIT (ECU)

BRAKE ACTUATOR

# FIG.2

```
                        ┌─────────────┐
                        │    START    │
                        └──────┬──────┘
                               │
                               ▼                    ST1
                       ╱───────────────╲              NO
                      ╱    IS ENGINE     ╲──────────────────┐
                      ╲   TURNED OFF?    ╱                   │
                       ╲───────┬────────╱                    │
                               │ YES                         │
                               ▼                    ST2      │
                       ╱───────────────╲              NO     │
                      ╱   |Pa|<|P1|?     ╲────────────────┐  │
                      ╲                  ╱                 │  │
                       ╲───────┬────────╱                  │  │
                               │ YES                       │  │
                    ┌──────────────────────┐               │  │
                    │ INSTRUCT ENGINE      │  ST3          │  │
                    │ RESTART              │               │  │
                    └──────────┬───────────┘               │  │
                               │                    ST4    │  │
                       ╱───────────────╲              NO   │  │
                      ╱  DURING RUNNING? ╲──────────────┐  │  │
                      ╲                  ╱              │  │  │
                       ╲───────┬────────╱               │  │  │
                               │ YES                    │  │  │
                       ╱───────────────╲       ST5      │  │  │
                      ╱     DURING       ╲         NO    │  │  │
                      ╱  BRAKE PRESSING   ╲──────────┐   │  │  │
                      ╲   OPERATION?      ╱          │   │  │  │
                       ╲───────┬────────╱            │   │  │  │
                               │ YES                 │   │  │  │
                    ┌──────────────────────┐         │   │  │  │
                    │ CALCULATE REQUIRED   │  ST6    │   │  │  │
                    │ THROTTLE OPENING     │         │   │  │  │
                    └──────────┬───────────┘         │   │  │  │
                               │                     │   │  │  │
                    ┌──────────────────────┐         │   │  │  │
                    │ INSTRUCT REQUIRED    │  ST7    │   │  │  │
                    │ THROTTLE OPENING AT  │         │   │  │  │
                    │ TIME OF ENGINE       │         │   │  │  │
                    │ RESTART              │         │   │  │  │
                    └──────────┬───────────┘         │   │  │  │
                               │◄────────────────────┴───┘  │  │
                    ┌──────────────────────┐                │  │
                    │ EXECUTE ENGINE       │  ST8           │  │
                    │ RESTART              │◄───────────────┘  │
                    └──────────┬───────────┘                   │
                               │◄──────────────────────────────┘
                        ┌──────┴──────┐
                        │    END      │
                        └─────────────┘
```

FIG.3

GENERATING SPEED SLOW-DOWN CONTROL OF INTAKE NEGATIVE PRESSURE IS EXECUTED
---- GENERATING SPEED SLOW-DOWN CONTROL OF INTAKE NEGATIVE PRESSURE IS NOT EXECUTED

VEHICLE SPEED

BRAKE PRESSING OPERATION

ENGINE START

DECREASE IN BRAKE NEGATIVE PRESSURE

RECOVERY OF BRAKE NEGATIVE PRESSURE

COASTING

0                                   t

BRAKE NEGATIVE PRESSURE

0                                   t

P1

Pa1

INCREASE BY DECREASE IN BRAKE NEGATIVE PRESSURE

LARGE

BRAKE PRESSING OPERATION AMOUNT

SMALL

STRONG

BRAKE FLUID PRESSURE (BRAKING FORCE)

WEAK

REQUIRED THROTTLE OPENING

0                                   t

# FIG.4

# FIG.5

```
                    ┌──────────────┐
                    │    START     │
                    └──────┬───────┘
                           ▼
                      ╱ST11 ╲
                  ╱  IS ENGINE  ╲      NO
                 ◇  TURNED OFF?  ◇──────────────────────┐
                  ╲             ╱                        │
                    ╲  │YES  ╱                           │
                       ▼ ST12                            │
                  ╱         ╲    NO                       │
                 ◇ |Pa|<|P1|? ◇──────────────────────────┤
                  ╲         ╱                             │
                    ╲│YES╱                               │
                     ▼                                   │
            ┌────────────────────────┐ ST13             │
            │ INSTRUCT ENGINE RESTART │                  │
            └───────────┬────────────┘                  │
                        ▼ ST14                           │
                  ╱         ╲    NO                       │
                 ◇ DURING RUNNING? ◇──────────────┐      │
                  ╲         ╱                      │      │
                    ╲│YES╱                        │      │
                     ▼ ST15                        │      │
                  ╱ DURING  ╲      NO              │      │
                 ◇ BRAKE PRESSING ◇───────────────┤      │
                  ╲ OPERATION? ╱                   │      │
                    ╲│YES╱                        │      │
                     ▼                             │      │
            ┌────────────────────────┐ ST16       │      │
            │ OBTAIN PEDAL FORCE Px(0) │            │      │
            └───────────┬────────────┘            │      │
                        ▼◄──────────────────┐     │      │
            ┌────────────────────────┐ ST17  │     │      │
            │ CALCULATE REQUIRED PEDAL│       │     │      │
            │  REACTION FORCE Pb(n)   │       │     │      │
            └───────────┬────────────┘       │     │      │
            ┌────────────────────────┐ ST18  │     │      │
            │ OUTPUT REQUIRED PEDAL   │       │     │      │
            │  REACTION FORCE Pb(n)   │       │     │      │
            └───────────┬────────────┘       │     │      │
            ┌────────────────────────┐ ST19  │     │      │
            │ OBTAIN PEDAL FORCE Px(n+1)│     │     │      │
            └───────────┬────────────┘       │     │      │
                        ▼ ST20               │     │      │
                  ╱          ╲    YES ┌─────────────┐ST21  │
                 ◇ Px(n+1)>Px(n)? ◇──►│   n←n+1     │      │
                  ╲          ╱         └─────────────┘      │
                    ╲│NO╱                                  │
                     ▼◄───────────────────────────────────┤
            ┌────────────────────────┐ ST22               │
            │  EXECUTE ENGINE RESTART │◄───────────────────┘
            └───────────┬────────────┘
                        ▼
                    ┌──────────┐
                    │   END    │
                    └──────────┘
```

# FIG.6

—— GENERATING SPEED SLOW-DOWN CONTROL OF INTAKE
NEGATIVE PRESSURE IS EXECUTED
- - - GENERATING SPEED SLOW-DOWN CONTROL OF INTAKE
NEGATIVE PRESSURE IS NOT EXECUTED

## INTERNATIONAL SEARCH REPORT

| | International application No. |
|---|---|
| | PCT/JP2010/069994 |

**A. CLASSIFICATION OF SUBJECT MATTER**
*B60T17/00*(2006.01)i, *F02D41/04*(2006.01)i

According to International Patent Classification (IPC) or to both national classification and IPC

**B. FIELDS SEARCHED**

Minimum documentation searched (classification system followed by classification symbols)
B60T17/00, F02D9/02, 29/02, 41/04

Documentation searched other than minimum documentation to the extent that such documents are included in the fields searched
Jitsuyo Shinan Koho           1922–1996   Jitsuyo Shinan Toroku Koho   1996–2011
Kokai Jitsuyo Shinan Koho     1971–2011   Toroku Jitsuyo Shinan Koho   1994–2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2005-90378 A  (Nissan Motor Co., Ltd.), 07 April 2005 (07.04.2005), paragraphs [0013] to [0020]; fig. 2 (Family: none) | 1-4 |
| Y | JP 2009-137547 A  (Toyota Motor Corp.), 25 June 2009 (25.06.2009), paragraph [0049] (Family: none) | 1-2 |
| Y | JP 11-278249 A  (Jidosha Kiki Co., Ltd.), 12 October 1999 (12.10.1999), paragraphs [0012], [0022]; fig. 2 (Family: none) | 3-4 |

| ☒ | Further documents are listed in the continuation of Box C. | ☐ | See patent family annex. |
|---|---|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 February, 2011 (08.02.11) | 22 February, 2011 (22.02.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/069994

C (Continuation). DOCUMENTS CONSIDERED TO BE RELEVANT

| Category* | Citation of document, with indication, where appropriate, of the relevant passages | Relevant to claim No. |
|---|---|---|
| A | JP 2006-193139 A (Toyota Motor Corp.), 27 July 2006 (27.07.2006), paragraph [0027] (Family: none) | 1-4 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006200370 A
- JP 2010185322 A
- JP 2006057513 A